# NEUE EUROPÄISCHE PATENTSCHRIFT

(11) **EP 0 940 086 B2**
(45) Veröffentlichungstag und Bekanntmachung des Hinweises auf die Entscheidung über den Einspruch: **11.04.2012**
(45) Hinweis auf die Patenterteilung: 25.09.2002
(21) Anmeldenummer: 99102874.7
(22) Anmeldetag: 03.03.1999
(51) Int. Cl.: A23G 1/04, A23G 7/00

(54) **Schokoladenanlage**
Chocolate plant
Installation pour chocolat

(30) Priorität: 06.03.1998 DE 19809651
(43) Veröffentlichungstag der Anmeldung: 08.09.1999
(73) Patentinhaber: Bühler Bindler GmbH, 51702 Bergneustadt (DE)
(72) Erfinder: Bindler, Uwe, 51702 Bergneustadt (DE)
(74) Vertreter: Hepp Wenger Ryffel AG

(56) Entgegenhaltungen:
- EP-A2- 0 559 401
- EP-A2- 0 563 692
- DE-U1- 9 419 075
- US-A- 3 536 236
- US-A- 5 478 184

## Beschreibung

Die Erfindung betrifft eine Anlage zur Herstellung von Nahrungsmitteln, insbesondere eine Schokoladenanlage, mit mindestens zwei Abschnitten, wobei in den Abschnitten die Nahrungsmittel vorzugsweise in Produktträgern bearbeitbar und/oder transportierbar sind.

Aus der DE-94 19 075 U1 ist z.B. eine Anordnung zum Umsetzen von Teigstücken von einem Gärwagen in einem Backofen bekannt. Der Backofen ist als Etagenbackofen mit einem Beladetisch ausgebildet, wobei der Beladetisch auf die Höhe der Etagen und des Gärwagens einstellbar ist und mit Einrichtungen zum Herausziehen und Entladen des Etagenbodens auf den ausserhalb des Gärwagens bleibenden Beladetisch versehen ist. Der Etagenboden ist z.B. als Abziehapparat oder Kipptrögelapparat ausgebildet und fährt über den Beladetisch. Alternativ kann der Etagenboden auch mit einer festen Oberfläche ausgerüstet sein und unter dem als Krabbler ausgebildeten Beladetisch fahren.

Die EP-0 563 692 A2 offenbart eine Temperier- und Überziehanlage für unterschiedliche Massen, insbesondere für weisse und nicht-weisse Schokolade. Diese Anlage weist zwei Baugruppen auf, die links und rechts von einem angetriebenen Laufband angeordnet sind. Jede der beiden Baugruppen besteht wiederum aus einer Temperiermaschine und einer Überziehmaschine, wobei die Temperiermaschine oder die Temperiermaschinen ortsfest angeordnet sind, während die Überziehmaschine oder die Überziehmaschinen quer zur Laufrichtung des Laufbandes verfahrbar angeordnet sind. In den Verbindungsleitungen sind Rohrabschnitte vorgesehen, die über ein Drehgelenk miteinander verbunden sind und an ihren Enden weitere Drehgelenke aufweisen, so dass die Überziehmaschinen ohne Leitungsentkopplung quer verfahrbar sind.

Mit der "Universalanlage Typ 275 Mini" ist ausserdem eine Kompaktanlage für die Herstellung von massiven und kremgefüllten Schokoladenartikeln bekannt. Die Anlage umfasst eine Schalensektion, eine Zentersektion, eine Bodensektion, eine Kühlsektion und eine Ausklopfsektion, wobei die Module ausgewechselt werden können.

Die aus dem Stand der Technik bekannten Schokoladenanlagen sind stets als Gesamtanlagen aufgebaut, die verschiedene Abschnitte, z.B. Formenwechselabschnitte, Anwärmabschnitte, Kühlabschnitte und Ausformungsabschnitte aufweisen. Die bekannten Anlagen werden auf spezielle Verwendungszwecke, z.B. zur Herstellung von Adventskalendern, zur Herstellung von Schokoladentafeln oder dergleichen zugeschnitten. Die Umrüstung der bekannten Anlage von einer Anlage zur Herstellung von Adventskalendern auf eine Anlage zur Herstellung von Schokoladentafeln ist in der Regel aufwendig, teilweise sogar unmöglich. Aufgrund ihrer speziellen Auslegung ermöglichen die bekannten Schokoladenanlagen auf der anderen Seite hohe Durchsätze bei der Herstellung der Produkte, auf die die jeweilige Schokoladenanlage zugeschnitten ist.

Problematisch ist also bei den bekannten Schokoladenanlagen, daß sich der Kauf einer solchen Schokoladenanlage nur dann rechnet, wenn die hergestellten Produkte in großen Chargen ausgeliefert werden können. Dies ist insbesondere problematisch, wenn die Markteinführung neuer Produkte ansteht, da in diesem Fall bei den Schokoladenanlagen, wie sie aus dem Stand der Technik bekannt sind, regelmäßig zur Herstellung des neuen Produktes eine neue Schokoladenanlage angeschafft werden muß, da sich bestehende Schokoladenanlagen nicht wirtschaftlich umrüsten lassen, ohne daß der Markterfolg des neuen Produktes vorhersehbar ist. Die Einführung neuer Produkte ist somit mit einem relativ hohen wirtschaftlichen Risiko verbunden. Darüber hinaus existiert heutzutage ein guter Markt für individuelle, in kleinen Chargen hergestellte Produkte und für saisonabhängig gehandelte Produkte. In beiden Fällen rentiert sich eine speziell für das jeweilige Produkt angeschaffte Schokoladenanlage erst nach einem relativ langen Nutzungszeitraum.

Ausgehend von den zuvor beschriebenen Problemen liegt der Erfindung die Aufgabe zugrunde, eine Anlage zur Herstellung von Nahrungsmitteln, insbesondere eine Schokoladenanlage, zur Verfügung zu stellen, die eine flexible Herstellung in der Regel kleiner Chargen verschiedener Produkte gewährleistet.

Erfindungsgemäß ist die zuvor hergeleitete und aufgezeigte Aufgabe dadurch gelöst, daß die einander folgenden Abschnitte Formenwechsel, Streckenausgleich, Formenanwärmer, Dosier- und Rüttelabschnitt, Hülsenbildungsabschnitt, Kühlabschnitt, Dosierabschnitt, Kühlabschnitt, Deckelabschnitt, Endkühlabschnitt und Ausformabschnitt zumindest teilweise mechanisch voneinander unabhängig sind. Die erfindungsgemäß verwirklichte mechanische Unabhängigkeit der Abschnitte voneinander ermöglicht eine individuelle Zusammenstellung einer Anlage vor Ort bei dem Hersteller der Nahrungsmittel, angepaßt an das herzustellende Produkt.

Die individuelle Zusammenstellbarkeit einer Schokoladenanlage nach der Erfindung wird dadurch weiter erleichtert, daß die mechanisch voneinander unabhängigen Abschnitte gegeneinander verschiebbar, insbesondere verfahrbar, sind. Entsprechende an den Abschnitten vorgesehene Einrichtungen ermöglichen also die Umkonfigurierung einer bestehenden Schokoladenanlage in kürzester Zeit.

Dadurch, daß gemäß einer weiteren Ausgestaltung der Erfindung die mechanisch voneinander unabhängigen Abschnitte unabhängig voneinander in Betrieb nehmbar sind, ergibt sich weiter die Möglichkeit, eine Anlage räumlich unverändert zu lassen, und lediglich einzelne Abschnitte in Betrieb zu nehmen oder außer Betrieb zu setzen, und so die Funktionalität der Anlage insgesamt anzupassen.

Eine optimale Steuerung des Herstellungsprozesses wird bei einer erfindungsgemäß ausgestalteten Schokoladenanlage dadurch gewährleistet, daß die mechanisch voneinander unabhängigen Abschnitte miteinander durch elektrische Zustands- und Geschwindigkeitssteuerungen zum seriellen oder parallelen Informationsaustausch verbunden sind.

Eine weitere Flexibilisierung einer erfindungsgemäß ausgestalteten Anlage wird dadurch erreicht, daß zur Übergabe der vorzugsweise in Produktträgern angeordneten Nahrungsmittel zwischen den mechanisch voneinander unabhängigen Abschnitten Transfereinrichtungen, nämlich Roboter oder pneumatische Umsetzvorrichtungen, vorgesehen sind. Diese Transfereinrichtungen dienen zur Übergabe der Nahrungsmittel zwischen benachbarten mechanisch voneinander unabhängigen Abschnitten. Mit den Transfereinrichtungen können jedoch auch ganze Abschnitte, je nach Anforderung, überbrückt werden. Bei einer zuletzt beschriebenen Überbrückung einzelner Abschnitte entfällt die Notwendigkeit einer räumlichen Umgestaltung der Gesamtanlage.

Zur Optimierung der Auslastung der verschiedenen Abschnitte ist es weiter vorteilhaft zwischen den mechanisch voneinander unabhängigen Abschnitten Zwischenspeicher vorzusehen.

Eine automatisierte Steuerung des Herstellungsprozesses einer erfindungsgemäß ausgestalteten Anlage wird trotz der Vielzahl von Möglichkeiten ihrer Zusammenstellung dadurch gewährleistet, daß die mechanisch voneinander getrennten Abschnitte zumindest teilweise maschinenlesbare Kennzeichnungen, insbesondere Transponder, aufweisen, anhand derer die Anlagensteuerung die jeweilige Anordnung erkennen kann, und somit automatisiert entsprechende Maßnahmen zur Prozeßsteuerung ergreift.

Der Herstellungsablauf wird weiter dadurch verbessert, daß auch die Produktträger der Nahrungsmittel, insbesondere der Schokolade, maschinenlesbare Kennzeichnungen aufweisen. Zur maschinenlesbaren Kennzeichnung eignen sich auch hier Transponder.

Werden zur Zustandskontrolle der Anlage Sensoren, insbesondere Kameras, vorgesehen, so lassen sich Fehlerzustände leicht erkennen.

Sind als Sensoren an der Anlage an den mechanisch voneinander getrennten Abschnitten zumindest teilweise Lesevorrichtungen für die maschinenlesbaren Kennzeichnungen der Produktträger angeordnet, so läßt sich jederzeit der aktuelle Zustand des Herstellungsvorganges überwachen und es wird sogar möglich, während des Herstellungsvorgangs die erfindungsgemäße Anlage auf ein anderes Produkt umzustellen.

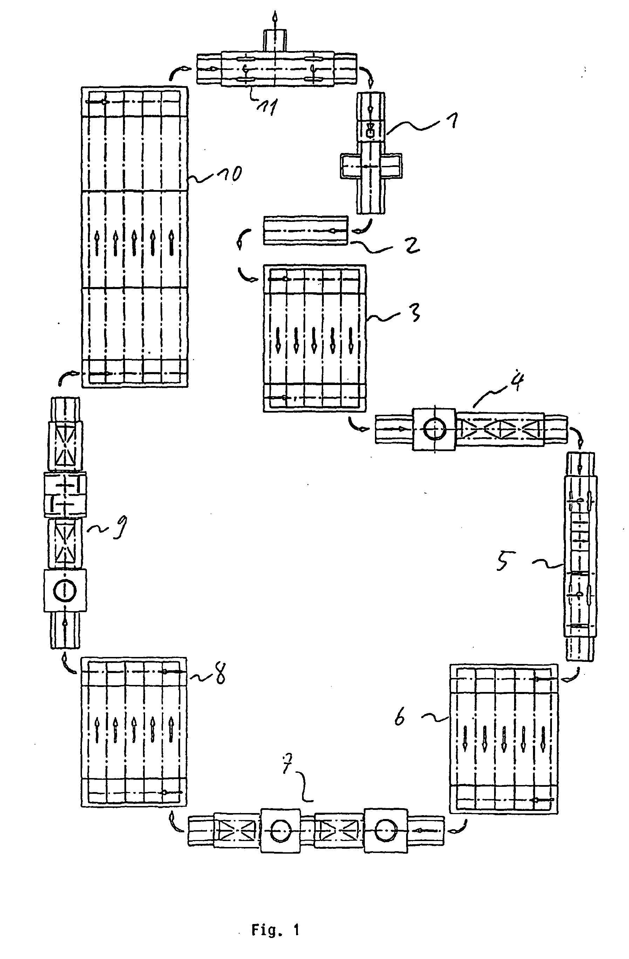

Im einzelnen gibt es nun eine Vielzahl von Möglichkeiten, die erfindungsgemäße Anlage zur Herstellung von Nahrungsmitteln, insbesondere eine Schokoladenanlage, auszugestalten und weiterzubilden. Dazu wird einerseits verwiesen auf die dem Patentanspruch 1 nachgeordneten Patentansprüche sowie andererseits auf die Beschreibung eines bevorzugten Ausführungsbeispiels in Verbindung mit der Zeichnung. Die einzige Figur der Zeichnung zeigt schematisch ein Ausführungsbeispiel einer erfindungsgemäß ausgestalteten Schokoladenanlage in einer Aufsicht.

Das in der einzigen Figur dargestellte Ausführungsbeispiel einer erfindungsgemäß ausgestalteten Schokoladenanlage ist so ausgelegt, daß sich mit dieser Anlage Schokoladen mit Füllung herstellen lassen.

Zur Herstellung von Schokoladen mit Füllung weist die dargestellte Schokoladenanlage zunächst einen Formenwechsel 1 auf. Der Formenwechsel 1 ist über eine nicht dargestellte Transfereinrichtung mit einem Streckenausgleich 2 verbunden. Der Streckenausgleich 2 ist wiederum über eine nicht dargestellte Transfereinrichtung mit einem Formenanwärmer 3 verbunden. An den Formenanwärmer 3 schließt sich an ein Dosier- und Rüttelabschnitt 4, in dem die Schokoladenmasse in die nicht dargestellten, die Produktträger bildenden Formen gefüllt und anschließend durch Rütteln homogenisiert wird. Dem Dosier- und Rüttelabschnitt 4 folgt ein Abschnitt zur Hülsenbildung 5. Die Notwendigkeit der Ausbildung von Hülsen ergibt sich aus der Anforderung, daß Schokolade mit einer Füllung hergestellt werden soll. Die Hülsenbildung wird anschließend in einem Kühlabschnitt 6 fortgesetzt. In die so entstandenen Hülsen innerhalb der Schokolade wird nun in einem Dosierabschnitt 7 die Füllung eingebracht. Die Kühlung der Füllung erfolgt anschließend in einem weiteren Kühlabschnitt 8. Der nachfolgende Deckelabschnitt 9 versieht die gefüllten Schokoladen mit einem Deckel. Die fertigen Schokoladen gelangen dann aus dem Deckelabschnitt 9 in einen Endkühlabschnitt 10 und abschließend in einen Ausformungsabschnitt 11 über den sich der Herstellungskreislauf zum Formenwechsler 1 schließt.

An dem in der einzigen Figur dargestellten Ausführungsbeispiel einer erfindungsgemäßen Schokoladenanlage läßt sich leicht nachvollziehen, daß diese Schokoladenanlage ohne weiteres auf die Herstellung von nicht gefüllten Schokoladen umstellbar ist. Hierzu werden lediglich der Abschnitt zur Hülsenbildung 5, der Kühlabschnitt 6, der Dosierabschnitt 7, der weitere Kühlabschnitt 8 und der Deckelabschnitt 9 außer Betrieb genommen, und die nicht dargestellten Formen direkt von dem Dosier- und Rüttelabschnitt 4 an den Endkühlabschnitt 10 übergeben. Diese direkte Übergabe der Formen von dem Dosier- und Rüttelabschnitt 4 an den Endkühlabschnitt 10 kann beispielsweise über ein einfaches Verfahren des Dosier- und Rüttelabschnittes 4 erfolgen.

Aus der vorstehenden Beschreibung eines Ausführungsbeispiels einer erfindungsgemäß ausgestalteten Schokoladenanlage erkennt man ohne weiteres das hohe Maß an Flexibilität einer derartigen Schokoladenanlage.

## Patentansprüche

1. Anlage zur Herstellung von Nahrungsmitteln, nämlich Schokoladenanlage, mit den einander folgenden Abschnitten: Formenwechsel (1), Streckenausgleich (2), Formenanwärmer (3), Dosier- und Rüttelabschnitt (4), Hülsenbildungsabschnitt (5), Kühlabschnitt (6), Dosierabschnitt (7), Kühlabschnitt (8), Deckelabschnitt (9), Endkühlabschnitt (10) und Ausformabschnitt (11), wobei
in den Abschnitten die Nahrungsmittel in Produktträgern bearbeitbar und/oder transportierbar sind, und wobei
die Abschnitte (1, 2, 3, 4, 5, 6, 7, 8, 9, 10, 11) zumindest teilweise mechanisch voneinander unabhängig sind, indem sie gegeneinander verfahrbar sind, und wobei
die Abschnitte unabhängig voneinander in Betrieb nehmbar sind, **dadurch gekennzeichnet,**
**dass** zur Übergabe der in den Produktträgern angeordneten Nahrungsmittel zwischen den mechanisch voneinander unabhängigen Abschnitten (1, 2, 3, 4, 5, 6, 7, 8, 9, 10, 11) Transfereinrichtungen, nämlich Roboter oder pneumatische Umsetzvorrichtungen, vorgesehen sind, die
- einer Übergabe der Nahrungsmittel zwischen benachbarten mechanischen voneinander unabhängigen Abschnitten dienen und
- wahlweise, je nach Anforderung, zur Herstellung nicht gefüllter Schokoladen, auch eine Überbrückung ganzer Abschnitte ermöglichen, nämlich der Abschnittsfolge: Hülsenbildungsabschnitt (5), Kühlabschnitt (6), Dosierabschnitt (7), Kühlabschnitt (8) und Deckelabschnitt (9).

2. Anlage nach Anspruch 1, **dadurch gekennzeichnet, dass** die mechanisch voneinander unabhängigen Abschnitte (1, 2, 3, 4, 5, 5, 6, 7, 8, 9, 10, 11) miteinander durch elektrische Zustands- und Geschwindigkeitssteuerungen zum seriellen oder parallelen Informationsaustausch verbunden sind.

3. Anlage nach einem der Ansprüche 1 bis 2, **dadurch gekennzeichnet, dass** zwischen den mechanisch voneinander unabhängigen Abschnitten (1, 2, 3, 4, 5, 5, 6, 7, 8, 9, 10, 11) Zwischenspeicher vorgesehen sind.

4. Anlage nach einem der Ansprüche 1 bis 3, **dadurch gekennzeichnet, dass** die mechanisch voneinander unabhängigen Abschnitte zumindest teilweise maschinenlesbare Kennzeichnungen, insbesondere Transponder aufweisen.

5. Anlage nach einem der Ansprüche 1 bis 4, **dadurch gekennzeichnet, dass** die Produktträger maschinenlesbare Kennzeichnungen, insbesondere Transponder, aufweisen.

6. Anlage nach einem der Ansprüche 1 bis 5, **dadurch gekennzeichnet, dass** zur Zustandskontrolle der Anlage Sensoren, insbesondere Kameras, vorgesehen sind.

7. Anlage nach Anspruch 6, **dadurch gekennzeichnet, dass** an den mechanisch voneinander unabhängigen Abschnitten zumindest teilweise Lesevorrichtungen für die maschinenlesbaren Kennzeichnungen der Produktträger angeordnet sind.

## Claims

1. Machine for production of food, that is a chocolate machine, with the consecutive parts: change of form (1), line equaliser (2), form heater (3), shaking part (4), part for making the husk (5), cooling part (6), measuring part (7), cooling part (8), lid part (9), final cooling part (10) and demoulding part (11),
in which food should be capable of being processed and/or transported in product holders, and
in which at least some of the parts (1,2,3,4,5,6,7,8,9,10,11) are mechanically independent of each other, while they can be moved around and
wherein the parts can be placed in service independently of each other, **characterised in that**
for hand-over of food arranged in product holders, transfer equipment is provided, that are robots or pneumatic conversion devices, among the mechanically independent parts (1,2,3,4,5,6,7,8,9,10,11),
providing for a hand-over of food between adjacent mechanically independent parts and,
if necessary, for the production of non-filled chocolates allowing a bridging of parts, that is the consecution of parts: part for making the husk (5), cooling part (6), measuring part (7), cooling part (8), lid part (9).

2. Machine as in claim 1, **characterised by** the fact that the mechanically independent parts (1,2,3,4,5,6,7,8,9,10,11) are connected to each other by electrical status and speed controls for serial and partial information exchange.

3. Machine as per one of the claims from 1 to 2, **characterised by** the fact that stores are provided between the mechanically independent parts (1,2,3,4,5,6,7,8,9,10,11).

4. Machine as per one of the claims from 1 to 3, **characterised by** the fact that at least some of the mechanically independent parts have machine-readable labels, in particular transponders.

5. Machine as per one of the claims from 1 to 4, **characterised by** the fact that the product holders have machine-readable labels, in particular transponders.

6. Machine as per one of the claims from 1 to 5, **characterised by** the fact that sensors, in particular cameras, are provided for the machine's status controls.

7. Machine as per claim 6, **characterised by** the fact that at least some reading devices for product holders' machine-readable labels are fitted to mechanically independent parts.

## Revendications

1. Equipement pour la production de produits alimentaires, en effet de chocolat, doté des sections successives (1, 2, 3, 4, 5, 5, 6, 7, 8, 9, 10, 11) :
d'un échangeur de moules (1), d'un compensateur de tension (2), d'un réchauffeur de moules (3), d'une station de tapotage (4), d'une station de moulage de coquilles (5), d'une section de refroidissement (6), d'une station de dosage (7), d'une section de refroidissement (8), d'une machine fabriquant l'opercule (9), d'un refroidisseur terminal (10) et d'une station de démoulage (11),
dans lesquelles les produits alimentaires peuvent être façonnés ou transportés de préférence dans les récipients prévus à cet effet,
dont les différents éléments (1, 2, 3, 4, 5, 5, 6, 7, 8, 9, 10, 11) sont au moins pour partie mécaniquement indépendants les uns des autres du fait qu'ils sont déplaçables les uns par rapport aux autres,
et qui sont **caractérisées par** un fonctionnement pouvant être assuré de façon indépendante du fait que
des machines, en effet des robots ou des appareils de transfert pneumatiques, sont prévues pour le passage des produits alimentaires contenus dans les récipients entre les différents éléments mécaniquement indépendants les uns des autres (1, 2, 3, 4, 5, 5, 6, 7, 8, 9, 10, 11) tout en servant d'un transfert des produits alimentaires entre les différentes sections voisines et mécaniquement indépendantes les unes des autres
et/ou permettant, selon la demande, pour la production de tablettes pleines un court-circuitage desdites sections, en effet de la consécution des sections: station de moulage de coquilles (5), section de refroidissement (6), station de dosage (7), section de refroidissement (8), machine fabriquant l'opercule (9).

2. Même équipement que celui de la première revendication, mais les secteurs mécaniquement indépendants les uns des autres (1, 2, 3, 4, 5, 5, 6, 7, 8, 9, 10, 11) sont reliés les uns aux autres par des accessoires électriques et variateurs de vitesse permettant un échange d'informations en série ou en parallèle.

3. Même équipement que celui de l'une des deux premières revendications, mais **caractérisé par** la possibilité d'insertion de sections d'alimentation intermédiaires entre les sections mécaniquement indépendantes les unes des autres (1, 2, 3, 4, 5, 5, 6, 7, 8, 9, 10, 11).

4. Même équipement que celui de l'une des trois premières revendications, mais **caractérisé par** la possibilité d'adjonction, au moins pour partie, dans les sections mécaniquement indépendantes les uns des autres, de codes identifiables par ordinateur, de transpondeurs en particulier.

5. Même équipement que celui de l'une des quatre premières revendications, mais dans ce cas les moules présentent des codes identifiables par ordinateur, de transpondeurs en particulier.

6. Même équipement que celui de l'une des cinq premières revendications, mais des capteurs et notamment des caméras sont prévus pour le contrôle de l'état de l'équipement.

7. Même équipement que celui de la sixième revendication, mais des appareils de lecture prévus pour des codes identifiables par ordinateur des moules sont installés au moins pour partie sur les sections de l'équipement mécaniquement indépendantes les unes des autres.
